# FASCICULE DE BREVET EUROPEEN

(11) **EP 3 477 197 B1**
(45) Date de publication et mention de la délivrance du brevet: **07.06.2023**
(21) Numéro de dépôt: 18202392.9
(22) Date de dépôt: 24.10.2018
(51) Int. Cl.: F23D 14/38, F23D 14/46, F23L 1/00, B23K 3/02

(54) **OUTIL CHAUFFANT A COMBUSTION DE GAZ, EN PARTICULIER DE TYPE FER A SOUDER OU A ECORNER**
HEIZWERKZEUG MIT GASVERBRENNUNG, INSBESONDERE VOM TYP LÖTKOLBEN ODER EISEN ZUM KANTENABSTOSSEN
GAS COMBUSTION HEATING TOOL, IN PARTICULAR A WELDING OR CORNER SMOOTHING IRON TYPE

(30) Priorité: 27.10.2017 FR 1760196
(43) Date de publication de la demande: 01.05.2019
(73) Titulaire: Guilbert Express, 94120 Fontenay sous Bois (FR)
(72) Inventeur: GUILLOU, Yves, 77177 Brou sur Chantereine (FR)
(74) Mandataire: Cabinet Netter

(56) Documents cités:
- EP-A1- 0 208 583
- EP-A1- 1 201 344
- EP-B1- 1 025 393
- DE-B- 1 114 758
- DE-C- 384 929
- DE-C- 578 175

## Description

L'invention a trait à un outil chauffant à combustion de gaz, et plus particulièrement du type comprenant un organe de préhension allongé et un brûleur disposé en avant de l'organe de préhension, dans le prolongement de celui-ci. Un tel brûleur ayant les caractéristiques du préambule de la revendication 1 est connu du document DE 384929.

De manière générique, le brûleur comporte une admission de gaz combustible, tandis que l'outil comprend un chemin d'air primaire qui débouche dans ce brûleur, en aval de l'admission de gaz combustible. Le brûleur comporte généralement une partie tubulaire dans laquelle le gaz combustible et l'air primaire se mélangent l'un à l'autre. Une extrémité de cette partie tubulaire débouche dans un corps de chauffe. Là, une flamme se forme, laquelle échauffe une partie utile de l'outil, dont la forme dépend de l'usage auquel l'outil est destiné. Dans le cas d'un fer de couvreur par exemple, cette partie utile prend la forme de ce que l'on appelle une panne dans la technique.

L'admission de gaz combustible dans le brûleur se fait par l'intermédiaire d'un injecteur, relié à une source de gaz par un circuit. L'injecteur est disposé à l'arrière de la partie tubulaire du brûleur, c'est-à-dire à une extrémité de celle-ci éloignée du corps de chauffe ou de la partie utile de l'outil. Généralement, de l'air primaire est aspiré dans le brûleur à travers des ouvertures radiales qui traversent une paroi de la partie tubulaire, immédiatement en avant de l'injecteur. Ces ouvertures débouchent directement à l'extérieur de l'outil ou dans un court chemin d'air qui commence à proximité du mélangeur.

De manière générale, la Demanderesse s'est fixée comme objectif d'améliorer la maintenance des outils du type mentionné plus haut. Elle a constaté qu'une part importante de cette maintenance est consacrée à l'échange de l'injecteur. Il arrive en effet qu'une partie de celui-ci se trouve colmatée, en particulier l'orifice d'injection de gaz. Ce colmatage résulte d'un phénomène de condensation qui se produit surtout en avant de l'injecteur et qui fait s'y accrocher des particules solides, lesquelles s'agglomèrent les unes aux autres.

Ces particules solides proviennent surtout de fumées générées lors du travail de l'outil, par exemple des fumées de soudure, lesquelles fumées sont aspirées dans le brûleur avec l'air primaire.

Pour éviter le colmatage, certains outils, notamment ceux que l'usage rend plus sensibles à ce phénomène, présentent classiquement un brûleur plus long. Les ouvertures radiales par lesquelles l'air est admis dans le brûleur ou l'admission du chemin d'air dans lequel ces ouvertures débouchent se trouvent alors plus éloignées de la partie utile de l'outil et, par conséquent, d'éventuelles fumées.

Toutefois, en allongeant le brûleur, l'on éloigne l'organe de préhension de la partie utile de l'outil. La main de l'utilisateur se trouve éloignée d'autant de la zone de travail, ce qui nuit à la précision.

Il en résulte une sorte de contradiction. Si le brûleur est court, alors il est aisé de travailler précisément, mais l'injecteur présente une courte durée de vie. Si le brûleur est long, alors l'injecteur présente une durée de vie plus longue, mais il devient difficile de travailler avec précision.

L'invention vise à améliorer cette situation et, en particulier, à proposer un outil chauffant du type mentionné en introduction qui permette de travailler précisément et bénéficie d'une maintenance aisée.

On propose un outil à combustion de gaz du type comprenant un organe de préhension allongé et un brûleur disposé en avant de l'organe de préhension, dans le prolongement de celui-ci. Le brûleur comporte une admission de gaz combustible. Un chemin d'air primaire débouche dans le brûleur, en aval de l'admission de gaz combustible. L'organe de préhension comporte au moins une admission d'air. Le chemin d'air primaire est organisé, en partie au moins, à travers l'organe de préhension, depuis cette admission d'air.

L'air primaire admis dans le brûleur est aspiré depuis l'organe de préhension, dans une zone de l'outil éloignée de la partie active, où le travail de l'outil génère moins de fumées, voire pas du tout. Le brûleur peut rester assez court, puisque l'admission d'air primaire ne se fait pas directement à travers celui-ci. L'outil proposé permet de travailler précisément. En même temps, on allonge la durée de vie de l'injecteur en limitant la pollution par les fumées, voire en la supprimant. Cela diminue directement la fréquence à laquelle l'on échange l'injecteur.

En outre, la Demanderesse a constaté que, dans l'outil proposé, le brûleur fonctionne de manière plus régulière, et ce quelle que soit l'orientation de l'outil : partie active en bas, en haut ou inclinée. En effet, l'éloignement mutuel de l'admission d'air primaire du chemin d'air et de l'admission de cet air dans le brûleur, autrement dit le fait que le chemin d'air primaire soit long, permet d'aspirer de l'air frais dans toute condition de travail. Cela résulte d'un puisage d'air primaire éloigné de la zone d'aspiration.

On propose également un outil à combustion de gaz du type comprenant un boîtier comprenant une face arrière capable de recevoir un organe de préhension allongé. Un brûleur fait partiellement saillie d'une face avant du boîtier, le brûleur comportant une admission de gaz combustible. Un chemin d'air primaire débouche dans le brûleur, en aval de l'admission de gaz combustible. La face arrière du boîtier comporte une admission d'air. Le chemin d'air primaire est organisé, en partie au moins, à travers le boîtier, depuis cette admission d'air.

Les caractéristiques et avantages de l'invention seront exposés plus en détail dans la description ci-après, en se référant aux dessins annexés, sur lesquels :
- la figure 1 est une vue en coupe longitudinale d'un fer à souder de couvreur ;
- la figure 2 est une vue en coupe selon la ligne II-II du fer de la figure 1 ;
- la figure 3 est une vue de détail de la partie III du fer de la figure 1 ;
- la figure 4 est une vue en coupe selon la ligne IV-IV du fer de la figure 1 ;
- la figure 5 est une vue en coupe selon la ligne V-V du fer de la figure 1 ;
- la figure 6 est une vue en coupe selon la ligne VI-VI du fer de la figure 2 ;
- la figure 7 est une vue en coupe selon la ligne VII-VII du fer de la figure 1 ;
- la figure 8 est une vue de détail de la partie VIII du fer de la figure 1 ;
- la figure 9 est une vue en coupe selon la ligne IX-IX du fer de la figure 1 ;
- la figure 10 est une vue de détail de la partie X de la figure 9 ;
- la figure 11 est une vue de détail de la partie XI de la figure 4 ;
- la figure 12 est une vue perspective du fer de couvreur de la figure 1 ;
- la figure 13 une vue en coupe longitudinale d'une variante du fer de la figure 1 ; et
- la figure 14 est une vue en perspective du fer de la figure 13.

Les dessins annexés pourront non seulement servir à compléter l'invention, mais aussi contribuer à sa définition, le cas échéant.

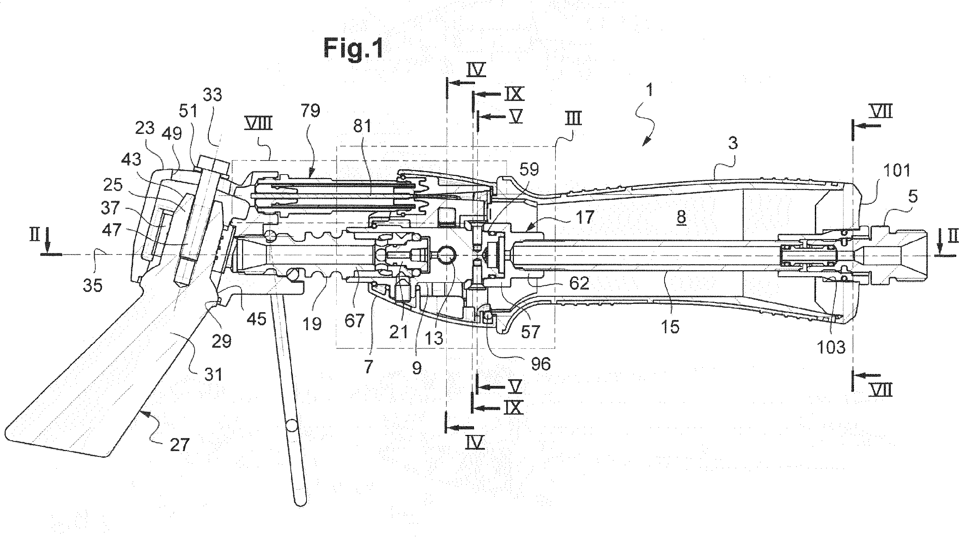

On fait référence aux figures 1 à 6.

Elles montrent un outil chauffant à combustion de gaz sous la forme d'un fer à souder 1 de type couvreur.

Le fer 1 comprend un organe de préhension sous la forme d'une poignée allongée 3. À une extrémité arrière, la poignée 3 porte un embout 5 d'arrivée de gaz combustible. Le fer 1 comprend en outre un boîtier de commande 7, disposé à une extrémité avant de la poignée 3, dans le prolongement de celle-ci.

La poignée 3 est généralement creuse : une cavité intérieure 8 s'étend le long de la poignée 3, ici de l'extrémité arrière de cette dernière à son extrémité avant. À l'extrémité avant et à l'extrémité arrière, la poignée 3 est ouverte sur la cavité 8.

Le boîtier 7 est généralement creux. Il présente ici une allure de parallélépipède rectangle. Le boîtier 7 comprend une cavité intérieure non référencée qui loge le corps allongé 9 d'un robinet. Ce robinet comprend en outre un pointeau 13, monté mobile à l'intérieur du corps 9.

Le gaz combustible est mené de l'embout 5 au corps 9 à travers un conduit tubulaire 15. Une extrémité arrière de ce conduit 15 est raccordée à une extrémité avant de l'embout 5, à l'intérieur de poignée 3. Un raccord à gaz 17 est intercalé entre une extrémité avant du conduit 15 et une entrée du corps 9, à l'arrière de celui-ci. Le conduit 15 s'étend le long de la poignée 3, à l'intérieur de celle-ci, à travers la cavité 8.

Le fer 1 comprend encore un brûleur dont un tube mélangeur 19 fait en partie saillie d'une face avant du boîtier 7, dans le prolongement de la poignée 3. Le mélangeur 19 admet en entrée un jet de gaz combustible formé en sortie d'un injecteur 21. L'injecteur 21 est disposé en sortie du corps allongé 9, dans l'axe de celui-ci.

À l'extrémité avant, le mélangeur 19 se raccorde à un corps de chauffe 23 constitué d'une pièce métallique creuse dans laquelle est logée la queue 25 d'une panne 27. Cette panne 27 traverse une ouverture inférieure 29 du corps de chauffe 23.

Une partie active 31 de la panne 27 fait saillie vers le bas au-delà de l'ouverture 29. Cette partie active 31 est destinée à venir en contact avec des pièces à travailler, notamment à souder. La queue 25 de la panne 27 est orientée selon un premier axe 33 qui est légèrement incliné vers l'avant et vers le bas lorsqu'un second axe 35 du mélangeur 19 et de l'injecteur 21 est horizontal.

Sur une portion médiane de son étendue axiale, la queue 25 de la panne 27 est entourée par une bande de tôle 37 logée dans le corps de chauffe 23, incurvée en cylindre autour de l'axe 33 de la queue 25. La bande 37 est enroulée sur la quasi-totalité d'un tour, ses extrémités étant situées en regard l'une de l'autre du côté avant du corps de chauffe 23. La bande 37 est maintenue à ses bords supérieur et inférieur par la paroi du corps de chauffe 23 et coopère avec celle-ci pour délimiter un espace annulaire entourant la queue 25.

La paroi du corps de chauffe 23 est évidée sur ses côtés latéraux et à l'arrière, radialement en regard de la bande 37, pour former un espace libre séparé de l'espace annulaire par l'épaisseur de la bande 37 et communiquant avec l'extrémité avant du mélangeur 19.

À sa partie supérieure, la queue 25 de la panne 27 se rétrécit progressivement selon une surface tronconique 43. À sa partie inférieure, la queue 25 s'évase selon une surface sphérique convexe 45. Une vis d'un premier type, ou première vis 47, traverse une ouverture supérieure 49 du corps de chauffe 23 et se visse dans un trou axial taraudé de la queue 25. Une tête de la première vis 47 s'appuie sur la paroi supérieure du corps de chauffe 23 par l'intermédiaire d'une rondelle 51. La surface sphérique 45 s'appuie sur un épaulement de l'ouverture inférieure 29. La panne 27 est immobilisée par rapport au corps de chauffe 23.

Le fer 1 possède un pied 55 qui lui permet de repose sur une surface horizontale de manière telle que la panne 27 soit éloignée de cette surface.

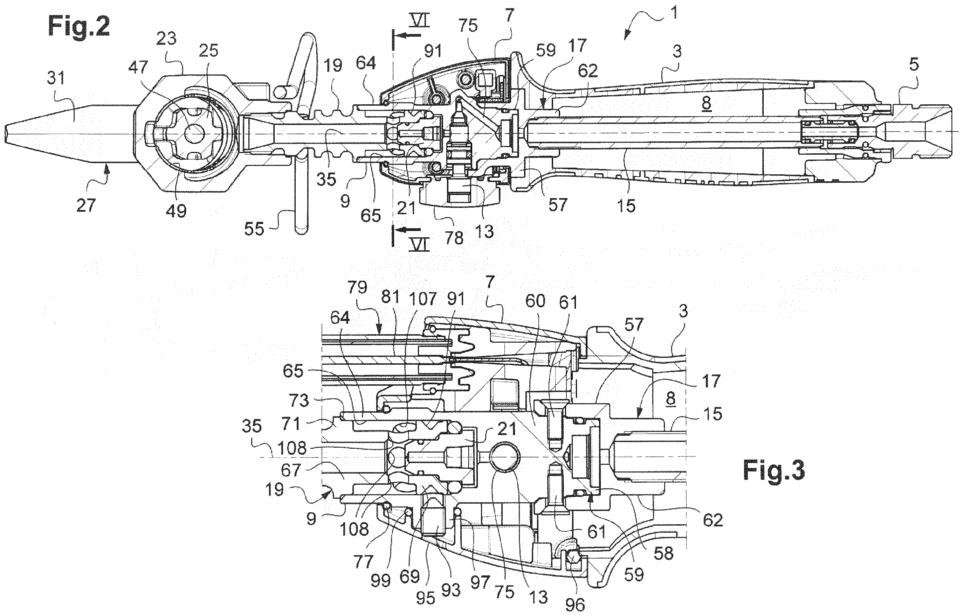

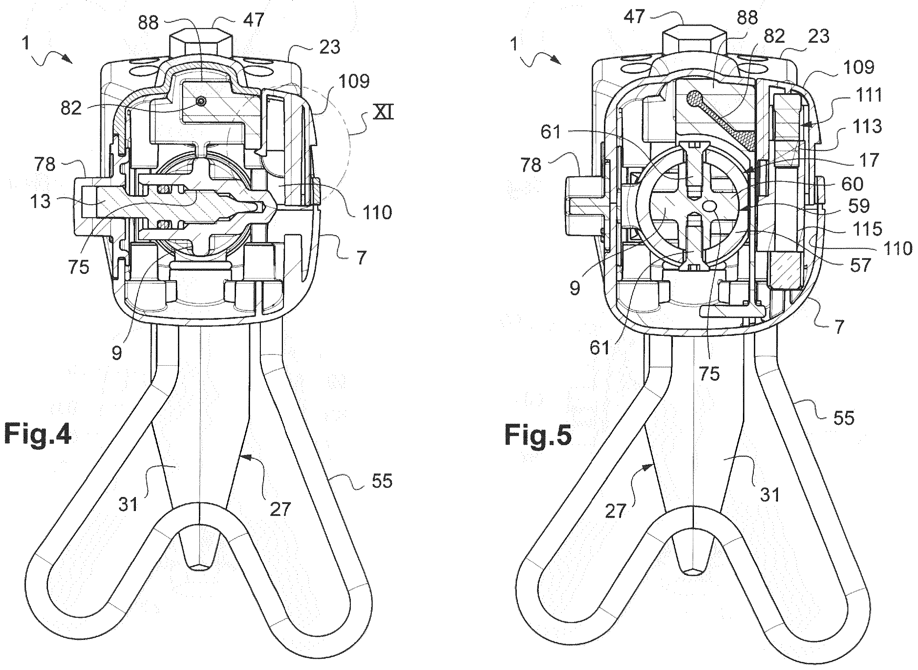

On fait plus particulièrement référence aux figures 3 et 5.

Le raccord 17 présente une allure de révolution. Une portion avant 57 du raccord 17 présente un alésage généralement cylindrique par l'intermédiaire duquel le raccord 17 est monté autour sur une portion arrière 59 du corps 9. La portion arrière 59 du corps 9 présente une section terminale 58 avec une surface extérieure généralement cylindrique et une section intermédiaire 60 avec un profil en croix. Le raccord 17 est fixé au corps 9 par deux vis d'un second type, ou secondes vis 61, qui traversent chacune une paroi latérale du raccord 17 radialement pour s'engager dans un taraudage respectif ménagé dans un croisillon respectif de la section intermédiaire 60 du corps 9.

Le raccord 17 présente une portion arrière 62 taraudée qui reçoit une portion avant filetée du conduit 15.

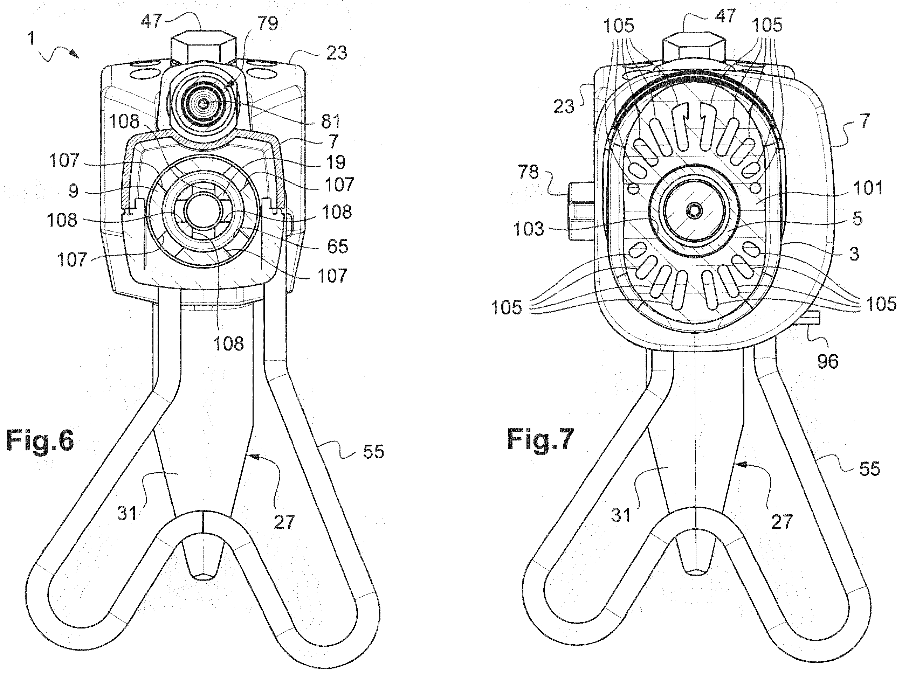

On fait plus particulièrement référence aux figures 3 et 6.

Le corps 9 présente une portion avant 64 avec un alésage 65. L'injecteur 21 est monté dans le corps 9, logé au fond de cet alésage 65.

Le mélangeur 19 est monté sur le corps 9. Une portion arrière 67 du mélangeur 19 est reçue dans l'alésage 65. Cette portion arrière 67 comprend une section terminale 69 et une section intermédiaire 71 mutuellement éloignées et présentant chacune une surface extérieure généralement cylindrique correspondant à l'alésage 65. Le mélangeur 19 est longuement guidé dans l'alésage 65 par l'intermédiaire des surfaces extérieures de la section terminale 69 et la section intermédiaire 71. Entre ces surfaces extérieures de guidage, le mélangeur 19 présente une surface extérieure en retrait de l'alésage 65 de la portion avant 64 du robinet 9, en sorte qu'une portion annulaire 72 de cet alésage 65 s'y trouve libre de matière.

La portion arrière 67 du mélangeur 19 comprend une surface d'épaulement 73, adjacente à la surface cylindrique de la section intermédiaire 71, par l'intermédiaire de laquelle le mélangeur 19 vient en butée contre une face avant du corps 9. À l'arrière, le mélangeur 19 loge une partie avant de l'injecteur 21.

On fait plus particulièrement référence aux figures 2 à 4.

Le corps 9 est traversé d'un conduit 75 qui mène le gaz combustible de l'entrée du robinet à la sortie de celui-ci. L'entrée du conduit 75 du corps 9 se trouve à l'arrière de ce corps 9, et sa sortie au fond de l'alésage 65. Le conduit 75 du corps 9 mène le gaz combustible de la sortie du raccord 17 à l'entrée de l'injecteur 21. Le pointeau 13 est monté dans le corps 9, en travers de son conduit 75, de manière à y régler un débit de gaz combustible. Le pointeau 13 est solidaire d'un bouton 78 monté à rotation sur l'extérieur du boîtier 7, sur une face latérale de celui-ci. Le bouton 78 est conformé en un curseur dont la position par rapport au boîtier 7 indique le débit de gaz combustible réglé dans le conduit 75 du corps 9.

La portion avant 64 du corps 9 fait partiellement saillie d'une face avant du boîtier 7, au travers d'une ouverture (non référencée) ménagée dans celle-ci. En cette ouverture est prévue une étanchéité entre la portion avant 64 du corps 9 et l'intérieur du boîtier 7. Ici, cette étanchéité comprend un joint d'un premier type, ou premier joint 77, torique, monté sur la surface extérieure de la portion avant 64, et coincé entre une portion en épaulement de cette surface et le boitier 7.

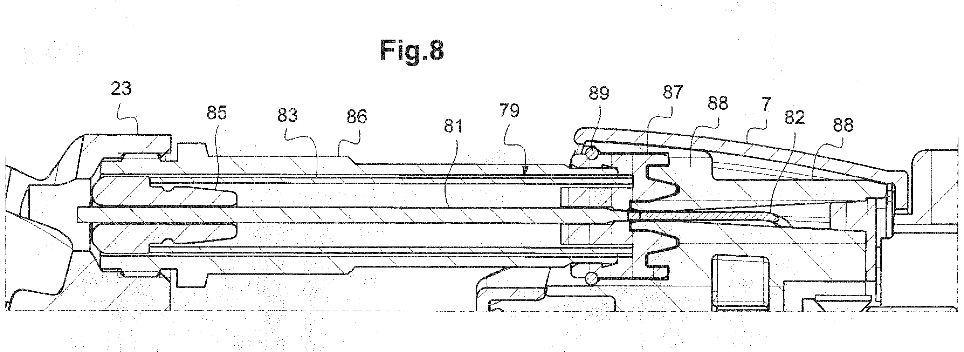

On fait plus particulièrement référence aux figures 1 et 8.

Une bougie d'allumage 79 s'étend longitudinalement est montée entre le boîtier 7 et le corps de chauffe 23. Une extrémité avant de la bougie 79 est reçue dans le corps de chauffe 23 tandis qu'une extrémité arrière est reçue dans le boîtier 7. La bougie 79 fait saillie de la face avant du boîtier 7, au travers d'un orifice non référencé, et s'étend dans le prolongement de la poignée 3, au-dessus du mélangeur 19. La bougie 79 comporte une électrode filaire 81 dont une extrémité avant se trouve dans la chambre de combustion du corps de chauffe 23. L'électrode 81 est maintenue à l'intérieur d'une gaine tubulaire 83 rigide grâce à un premier bouchon 85 monté à l'extrémité avant de la gaine 83 et un second bouchon 87 monté à son extrémité arrière. La bougie 79 est logée dans un carter tubulaire 86, dont l'avant est reçu dans le corps de chauffe 23 et l'arrière dans le boîtier 7. Ici, le second bouchon 87 ferme également l'extrémité arrière du carter 83 en assurant en outre le maintien de la bougie 79 à l'intérieur de ce carter 86.

Une partie arrière du carter 86, y compris le second bouchon 87, est reçue dans un évidement ménagé dans une pièce de garniture 88 logée dans la cavité intérieure du boîtier 7. L'évidement est en correspondance de forme avec le second bouchon 87. La garniture 88 assure une étanchéité entre l'orifice du boîtier 7 à travers lequel la bougie 79 fait saillie de ce boîtier 7. Un anneau élastique 89 coincé entre la garniture 88 et le second bouchon 87 assure le maintien de la bougie 79 dans le boîtier 7.

Le boîtier 7 présente une face avant pratiquement étanche aux gaz résultant des étanchéités prévues avec la bougie 79 et le mélangeur 19.

On fait plus particulièrement référence à la figure 3.

Une gorge circonférentielle 91 est ménagée à la surface extérieure du mélangeur 19, ici sur la section terminale 69. La gorge 91 coopère avec l'extrémité d'une vis pointeau 93 logée dans un taraudage du corps 9 qui débouche radialement dans l'alésage 65. La gorge 91 présente un profil trapézoïdal et l'extrémité de la vis pointeau 93 peut venir s'appuyer contre l'un au moins des flancs de la gorge 91. Le vissage de la vis pointeau 93 résulte en un effort sur le corps 9 ayant une composante axiale. En réaction à cet effort, la surface d'épaulement 73 du mélangeur 19 se trouve serrée contre l'extrémité avant du corps 9. La gorge 91 et la vis pointeau 93 assurent conjointement le maintien du mélangeur 19 sur le corps 9.

En regard du taraudage prévu dans le corps 9 pour la vis pointeau 93, le boîtier 7 présente un orifice inférieur 95, qui autorise le passage d'un outil adapté à la manipulation de la vis pointeau 93, ici une clé de type six pans 96.

La vis pointeau 93 peut être dévissée depuis l'extérieur du boîtier 7, jusqu'à se désengager de la gorge circonférentielle 91. L'ensemble formé du mélangeur 19 et de l'injecteur 21 monté dans celui-ci peut être extrait de l'alésage 65, depuis la face avant du boîtier 7, sans ouvrir ce dernier. Ceci permet de changer aisément l'injecteur 21.

La clé 96 est logée en partie dans une cavité du boîtier 7 ouverte sur la face latérale de celui-ci. Cette cavité peut-être fluidiquement isolée de la cavité intérieure du boitier 7. On peut ainsi préserver une éventuelle étanchéité de la cavité intérieure. Ici, la cavité qui reçoit la clé 96 se trouve en correspondance de forme avec cette dernière. Lorsqu'elle se trouve dans cette cavité, la clé 96 obture, en grande partie au moins, les orifices par lesquels cette cavité débouche sur les faces latérales du boîtier 7. Ceci rend ces orifices, et la cavité en question, pratiquement étanches aux gaz. On peut prévoir alors que cette dernière cavité communique fluidiquement avec la cavité intérieure 8 du boîtier 7, sans nuire à l'étanchéité de cette dernière.

Le taraudage recevant la vis pointeau 93 est percé dans une portion en saillie 97 du corps 9, laquelle dépasse radialement du reste de ce corps 9, ici sur une section de la partie avant 64 de ce corps 9 logée dans le boîtier 7. Une étanchéité est prévue entre cette portion en saillie 97 et l'intérieur du boîtier 7, à proximité de l'orifice inférieur 95. Cette étanchéité comprend ici un joint d'un second type, ou second joint 99, torique. Le boîtier 7 présente une face inférieure pratiquement étanche aux gaz malgré l'orifice inférieur 95.

La face arrière du boîtier 7 est agencée pour recevoir l'extrémité avant de la poignée 3. Cette face arrière est ouverte sur la cavité intérieure du boîtier 7. L'intérieur du boîtier 7 et l'intérieur de la poignée 3 se trouvent en communication fluidique mutuelle.

On fait référence aux figures 1 et 7.

Un bouchon 101 est monté à l'arrière de la poignée 3. Le bouchon 101 ferme la cavité intérieure 8 de la poignée 3. Le bouchon 101 est traversé par un alésage central 103, qui reçoit l'embout 5, et par une pluralité d'orifices d'un second type, ou seconds orifices105, répartis autour de l'alésage central 103. De l'air primaire peut être admis dans la cavité intérieure 8 de la poignée 3 par les seconds orifices 105. Du fait que les faces du boîtier 7 autres que la face arrière sont pratiquement étanches aux gaz, l'intérieur du boîtier 7 contient principalement de l'air provenant de la cavité intérieure 8 de la poignée 3.

Un chemin d'air primaire se trouve ainsi organisé le long de la poignée 3, depuis l'arrière de celle-ci jusqu'à l'avant. Ce chemin emprunte la cavité intérieure 8 de la poignée 3. Il se prolonge au-delà de l'avant de cette poignée 3, à l'intérieur du boîtier 7, où l'air est admis par la face arrière.

On fait plus particulièrement référence aux figures 3 et 6.

La paroi latérale du corps 9 est percée d'orifices d'un troisième type, ou troisièmes orifices 107, qui débouchent chacun radialement dans l'alésage 65, dans l'espace annulaire 72. Ici, ces troisièmes orifices 107 sont percés sur la portion avant 64 du corps 9. Les troisièmes orifices 107 mettent en communication fluidique mutuelle l'intérieur de l'alésage 65 et l'intérieur du boîtier 7 où est logé le corps 9. Les troisièmes orifices 107 sont également répartis de manière angulaire à la circonférence du corps 9. Ici, les troisièmes orifices 107 sont au nombre de quatre.

Des ouvertures radiales 108 sont en outre ménagées dans la paroi du mélangeur 19, immédiatement en avant de l'injecteur 21, entre la section terminale 69 et la section intermédiaire 71. Ces ouvertures radiales 108 assurent une communication de fluide entre l'intérieur de l'alésage 65 et l'intérieur du mélangeur 19. Les ouvertures radiales 108 sont également réparties sur la circonférence du mélangeur 19. Elles sont ici au nombre de quatre.

Dans le mélangeur 19, le jet de gaz combustible sortant de l'injecteur 21 se mélange à de l'air primaire qui est admis à l'intérieur du mélangeur 19 par les ouvertures radiales 108. Cet air primaire est aspiré depuis l'intérieur de l'alésage 65, et l'intérieur du boîtier 7 par l'intermédiaire des troisièmes orifices 107 du corps 9. Cette aspiration résulte en partie au moins du jet de gaz combustible.

Le chemin d'air primaire, organisé depuis l'arrière de la poignée 3 et à travers cette dernière, débouche dans le mélangeur 19 par les ouvertures radiales 108, en aval de l'injecteur 21, après avoir traversé une partie du boitier 7, la paroi du corps 9 et l'espace annulaire 72 de l'alésage 65.

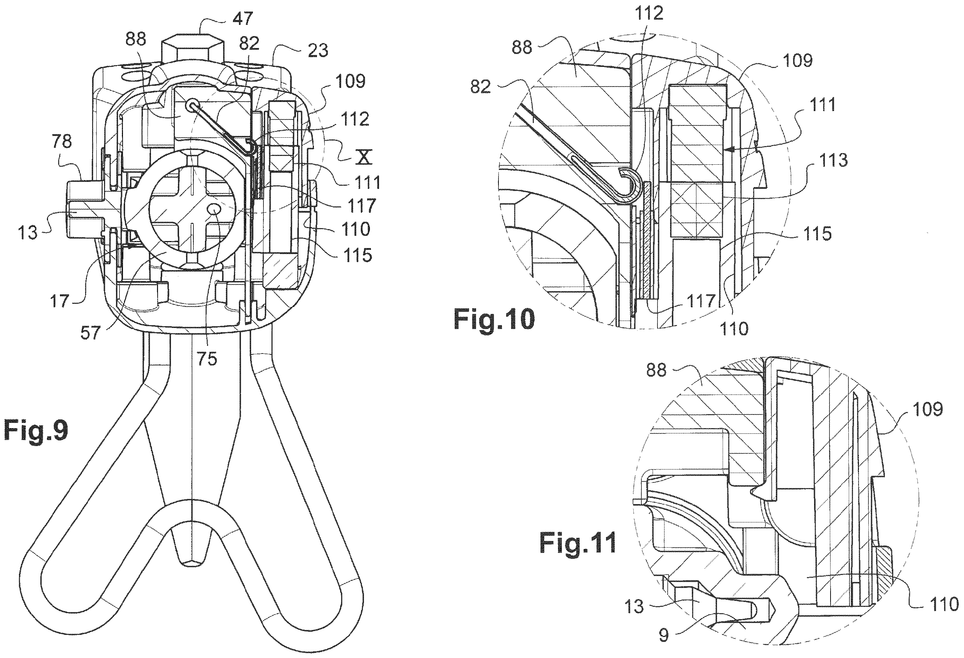

On fait référence aux figures 9 et 10.

Un second bouton 109 est monté à coulissement sur le boîtier 7, dans une seconde cavité 110 du boîtier 7 et ouverte sur la face supérieure de celui-ci. Ici, cette cavité est en outre ouverte sur une face latérale du boîtier 7. Cette cavité 110 est en partie au moins ménagée dans la pièce de garniture 88.

Le second bouton 109 peut y coulisser entre une position haute où il affleure avec la surface extérieure du boîtier 7, et une position basse où il est en retrait de cette surface. Le second bouton 109 loge un actionneur piézoélectrique 111 dont une partie formant poussoir 113 se trouve en regard d'un organe fixe 115 en saillie dans la cavité intérieure du boîtier 7. En passant de sa position haute à sa position basse, le second bouton 109 provoque l'enfoncement de la partie poussoir 113 par réaction de l'organe fixe 115 sur celui-ci et l'actionnement de l'actionneur 111.

Un tronçon de fil électriquement conducteur 82 contacte l'extrémité de l'électrode 81 de la bougie 79. Une extrémité de ce tronçon 82 est agencée en une boucle 112 qui fait saille à l'intérieur de la seconde cavité 110 du boîtier 7. Cette boucle 112 contacte un connecteur 117, relié électriquement à une électrode de l'actionneur 111. Le connecteur 117, ici en forme de patte, est maintenu dans le second bouton 109.

La bougie 79 et le tronçon 82 font partie d'une ligne d'allumage. La pièce de garniture 88 est agencée pour recevoir l'arrière de la bougie allongée. Le tronçon 82 est logé dans cette pièce de garniture 88.

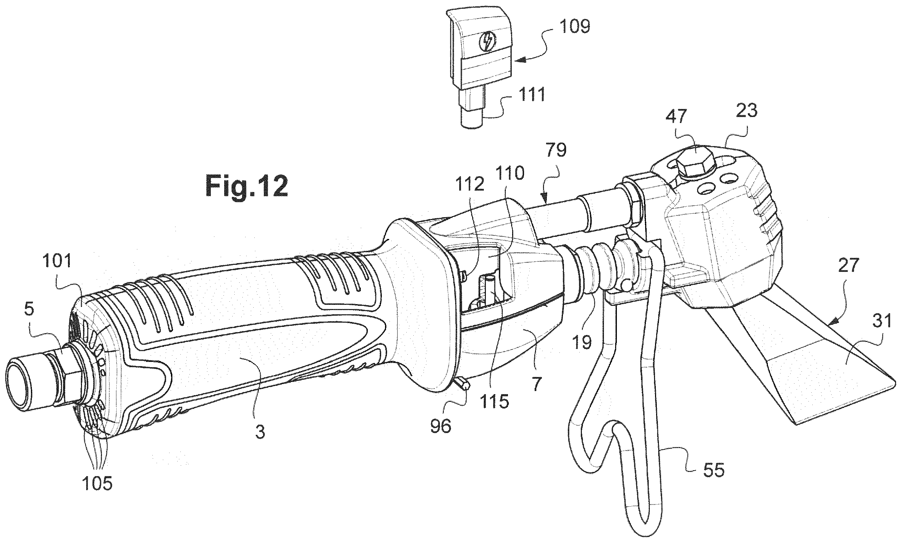

On fait plus particulière référence aux figures 11 et 12.

Le second bouton 109 est monté dans la seconde cavité 110 du boîtier 7 de manière amovible, ici par clipsage, grâce à une portion en forme de patte 119 du bouton 109 qui engage une portion de retenue de la pièce de garniture 88.

Le second bouton 109 peut être retiré de la seconde cavité 110, et avec lui l'actionneur 111, sans agir sur la bougie 79. En particulier, le tronçon 82 reste en place dans le boîtier 7. L'actionneur 111 peut être retiré du second bouton 109 afin de remplacement par exemple.

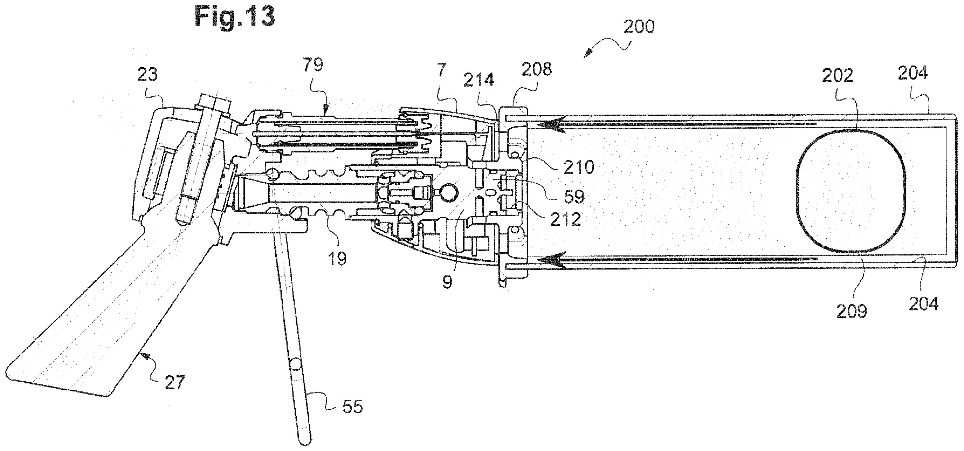

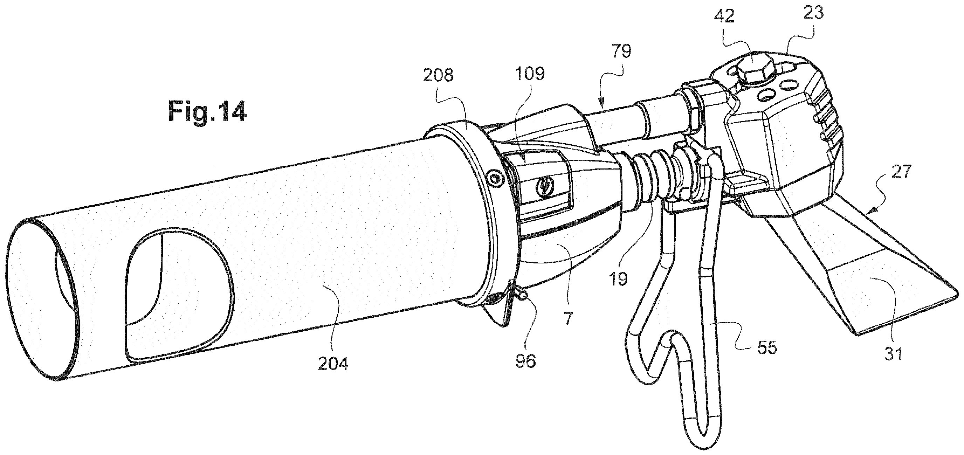

On fait référence aux figures 13 et 14.

Elle montre un second fer de couvreur 200 en variante du fer de couvreur 1 des figures précédentes.

Le second fer 200 se distingue du fer 1 précédent en ce qu'il est prévu pour emporter une source de gaz combustible sous la forme d'une cartouche 202 généralement cylindrique.

L'organe de préhension y prend la forme d'une chemise allongée 204 avec une cavité intérieure 206 qui loge la cartouche 202 en l'entourant. À l'avant, la chemise 202 est fixée sur le boîtier 7 par l'intermédiaire d'un flasque circulaire 208 disposé à l'arrière du boîtier 7. À l'arrière, la chemise 202 est ouverte sur la cavité intérieure 206.

La chemise 204 est réalisée sous la forme d'une portion de cylindre creux dont le diamètre intérieur est sensiblement supérieur au diamètre extérieur de la cartouche 202. Entre la paroi intérieure de la chemise et la paroi extérieure de la cartouche 202, une portion annulaire 209 de la cavité intérieure 206 est laissée libre de matière. De l'air primaire peut circuler dans cette portion annulaire 209, le long de la chemise 204, depuis l'extrémité arrière cette dernière.

Une face arrière du flasque 208 présente une gorge circulaire qui reçoit une extrémité avant de la chemise 202. Une partie centrale 210 du flasque 208 présente un alésage 212 par l'intermédiaire duquel le flasque 208 se monte sur la portion arrière 59 du corps 9, à la place du raccord 17 décrit plus haut.

Le flasque 208 recouvre la face arrière du boîtier 7. Le flasque 208 est traversé d'une pluralité d'orifices d'un quatrième type, ou quatrièmes orifices 214, qui mettent chacun la cavité intérieure 206 de la chemise 204, en particulier la portion annulaire 209, et l'intérieur du boîtier 7 en communication fluidique mutuelle.

Le chemin d'air primaire se prolonge ainsi à l'intérieur du boîtier 7, et, de là, débouche dans le mélangeur 19 de la manière décrite plus haut en relation avec la figure 3 notamment.

On vient de décrire deux variantes d'un fer couvreur, l'une destinée à être reliée à une source externe de gaz combustible par l'intermédiaire de l'embout 5, l'autre à embarquer une cartouche de gaz combustible. Ces deux variantes se distinguent l'une de l'autre exclusivement par les éléments montés en arrière du boîtier 7 et la manière de raccorder le circuit de gaz combustible au corps 9.

Par sa face arrière ouverte sur l'intérieur, la portion du chemin d'air primaire qui s'étend dans le boîtier 7 se raccorde à la portion de ce chemin qui s'étend à l'intérieur de l'organe préhension et le long de celui-ci. D'une certaine manière, un premier chemin d'air primaire est organisé à travers le boîtier 7, lequel débouche dans le mélangeur 19 et présente une admission en face arrière du boîtier, tandis qu'un second chemin d'air primaire est organisé à travers l'organe de préhension, de l'arrière de celui-ci à l'avant, ces deux chemins se raccordant l'un à l'autre en face arrière du boîtier 7.

L'invention peut ainsi être vue comme un outil chauffant à combustion de gaz du type comprenant un boîtier comprenant une face arrière capable de recevoir un organe de préhension allongé, un brûleur qui fait partiellement saillie d'une face avant du boîtier, le brûleur comportant une admission de gaz combustible. Un chemin d'air primaire débouche dans le brûleur, en aval de l'admission de gaz combustible. La face arrière du boîtier comporte une admission d'air et le chemin d'air primaire est organisé, en partie au moins, à travers le boîtier, depuis cette admission d'air.

Dans la description qui précède, les termes "avant" et "arrière" sont utilisés en référence à l'outil chauffant, dont l'avant correspond à la partie utile au travail et l'arrière à la partie opposée. D'une manière générale, ces termes sont équivalents à ceux de "aval" et "amont" pour les éléments impliqués dans la circulation du gaz combustible, laquelle se fait de l'arrière de l'outil à l'avant de celui-ci.

Les outils chauffants décrits plus haut ont en commun un chemin d'air primaire interne, organisé de l'arrière de l'organe de préhension jusqu'à l'intérieur du mélangeur 19. Le long de ce chemin, une circulation de l'air est essentiellement animée par l'aspiration provoquée par la sortie de l'injecteur 21 (effet Venturi).

Dans les outils chauffants décrits plus haut, une étanchéité entre le boîtier 7 et l'organe de préhension, la poignée 3 ou le flasque circulaire 208, résulte d'une coopération de forme de ces pièces. Aucun autre élément d'étanchéité n'est prévu entre le boîtier 7 et l'organe de préhension, en face arrière du boîtier 7. La précision de la liaison entre ces pièces est suffisante en pratique pour assurer une étanchéité en basse pression. Une telle étanchéité pourrait cependant être prévue, par exemple afin d'obtenir une aspiration plus efficace le long de l'organe de préhension.

Le boîtier 7 décrit plus haut présente des faces autres que sa face arrière rendues étanches aux gaz. Il en résulte que l'air primaire admis dans le mélangeur 19 provient presque exclusivement de l'organe de préhension. Dans certains cas toutefois, on pourra souhaiter admettre une partie de l'air primaire depuis une zone de l'outil plus proche du brûleur. On pourra dans ce cas prévoir un orifice supplémentaire dans le boîtier 7, par exemple sur le dessous de celui-ci, ou, plus simplement, se passer des étanchéités spécifiques décrites plus haut. Il conviendra cependant de tenir compte du fait qu'une telle ouverture pourrait admettre de l'air de manière prépondérante du fait de sa proximité au lieu où est générée l'aspiration, à savoir l'injecteur 21. On privilégiera de ce fait un ou plusieurs orifices de diamètre réduit.

Les outils chauffants décrits ci-dessus présentent une maintenance plus efficace que les outils classiques, d'abord du fait que la durée de vie de l'injecteur 21 s'y trouve augmentée. Le cas échéant, le changement de l'injecteur 21 se trouve simplifié, ce dernier pouvant être extrait de l'outil depuis la face avant du boitier 7, sans avoir à ouvrir ce dernier, et en utilisant uniquement la clé 96 intégrée. En outre, le changement de l'actionneur piézoélectrique 111 est également simplifié du fait de son intégration dans un bouton qui peut être extrait du boîtier 7 depuis l'extérieur de celui-ci, sans l'ouvrir, et sans utiliser d'outil.

L'invention décrite ici ne se limite pas aux fers de type couvreur mais concerne tous les outils chauffants à combustion de gaz, quelle que soit la forme que peut prendre la partie utile de l'outil, celle qui sert directement au travail dans l'application envisagée. Sans limitation, l'invention s'applique ainsi également à un fer de type à écorner, dans lequel la partie utile prend la forme d'un embout chauffant généralement cylindrique.

On a également décrit un outil chauffant du type comprenant un boîtier propre à loger un actionneur de type piézoélectrique et une ligne d'allumage comprenant une bougie allongée qui fait saillie du boîtier. Le boîtier loge une pièce de garniture agencée pour recevoir l'arrière de la bougie allongée, tandis qu'une partie de la ligne d'allumage raccordant la bougie à l'actionneur piézoélectrique est logée dans cette pièce de garniture. Cette partie de la ligne d'allumage est réalisée sous la forme d'une portion de fil rigide mais élastique. Cette portion de fil est maintenue par la partie verticale comprenant la boucle 112. Ce maintien immobilise le fil dans le sens longitudinal de l'appareil. Ensuite, cette portion de fil présente un premier pli angulaire, puis un second pli, de sorte qu'à son extrémité opposée à la boucle 112, la portion de fil s'étend dans la direction longitudinale de l'outil. Cette conformation particulière permet à la portion de fil de se déformer dans deux directions : la boucle 112 peut se déplacer dans un plan généralement vertical, en particulier sous l'action de l'actionneur piézoélectrique 111 ou de la poussée de l'extrémité opposée de cette portion de fil, tandis que le reste du fil peut reculer dans la direction longitudinale de l'outil, en particulier sous l'action de la ligne d'allumage. Cet agencement de l'outil chauffant constitue un autre aspect encore de l'invention, lequel peut être exploité avec un chemin d'air primaire organisé de manière classique.

La pièce de garniture comprend une cavité agencée pour loger l'actionneur piézoélectrique et la partie en question de la ligne d'allumage se termine dans cette cavité, en contact avec un contact relié audit actionneur. L'actionneur et le contact auquel il est relié sont montés dans un bouton qui est monté de manière amovible dans la cavité. L'actionneur est de type poussoir et la cavité présente un élément en saillie en regard de l'actionneur, tandis que le bouton est monté à translation sur le boîtier. La pièce de garniture est en matière plastique. La bougie est reçue à une extrémité arrière dans une portion de la pièce de garniture de forme correspondante.

L'invention n'est pas limitée aux modes de réalisation décrits plus haut, à titre d'exemples uniquement, mais englobe toutes les variantes que pourra envisager l'homme de l'art.

## Revendications

1. Outil (1) à combustion de gaz du type comprenant :
- un organe de préhension (3, 204) allongé ;
- un brûleur (19) disposé en avant de l'organe de préhension (3, 204), dans un prolongement de celui-ci, le brûleur (19) comportant une admission de gaz combustible (21) ;
- un chemin d'air primaire qui débouche dans le brûleur (19), en aval de l'admission de gaz combustible (21) ;
**caractérisé en ce que** l'organe de préhension (3, 204) comporte au moins une admission d'air primaire et que le chemin d'air primaire est organisé, en partie au moins, à travers l'organe de préhension (3, 204), depuis cette admission d'air primaire, l'air primaire admis dans le brûleur (19) étant aspiré depuis l'organe de préhension (3, 204).

2. Outil selon la revendication 1, dans lequel l'organe de préhension (3, 204) comporte au moins une cavité intérieure (8, 206) qui s'étend le long d'une partie au moins de celui-ci, et le chemin d'air primaire s'étend au moins partiellement dans cette cavité intérieure (8, 206).

3. Outil selon la revendication 2, dans lequel l'admission d'air (105) comporte au moins une ouverture (105) ménagée dans l'organe de préhension (3, 204), cette ouverture (105) menant à la cavité intérieure (8, 206).

4. Outil selon la revendication 3, dans lequel l'ouverture (105) est ménagée à proximité de l'arrière de l'organe de préhension (3, 204).

5. Outil selon l'une des revendications 2 à 4, dans lequel la cavité intérieure (8, 206) s'étend depuis l'arrière de l'organe de préhension (3, 204), et l'outil comprend en outre un bouchon (101) monté à l'arrière de l'organe de préhension (3, 204), ce bouchon (101) obturant au moins partiellement la cavité intérieure (8, 206).

6. Outil selon l'une des revendications précédentes, comprenant en outre un boîtier (7) généralement creux, à l'arrière duquel se monte l'organe de préhension (3, 204), dans lequel le boîtier (7) loge une partie du brûleur (19) comportant au moins l'admission de gaz combustible (21), et le chemin d'air primaire est organisé en partie au moins à travers le boîtier (7), depuis l'arrière de celui-ci.

7. Outil selon la revendication 6 comportant un corps de robinet (9) logé en partie au moins dans le boîter (7), dans lequel le corps de robinet (9) loge au moins une partie du brûleur (19) correspondant à l'admission de gaz combustible (21), et le chemin d'air emprunte au moins un passage (107) ménagé dans le corps de robinet (9) entre l'intérieur du boîtier (7) et le brûleur (19).

8. Outil selon la revendication 7, dans lequel le corps de robinet (9) fait saillie de l'avant du boîtier (7) et l'outil comprend une étanchéité (77) entre le corps de robinet (9) et l'intérieur du boîtier (7).

9. Outil selon l'une des revendications 6 à 8, dans lequel le boîtier (7) est étanche au moins sur l'avant de celui-ci.

10. Outil selon l'une des revendications 7 et 8, dans lequel le brûleur (19) est monté sur le corps de robinet (9).

11. Outil selon la revendication 10, dans lequel le brûleur (19) comporte une gorge à profil trapézoïdal (91) qui coopère avec une vis pointeau (93) montée à mobilité dans le corps de robinet (9).

12. Outil selon la revendication 11, dans lequel le boîtier (7) comporte un passage (95) qui donne accès à la vis pointeau (93) depuis le dessous du boîtier (7).

13. Outil selon l'une des revendications 1 à 6 et 9 comprenant en outre un raccord de gaz combustible (17) monté réversiblement à l'arrière d'un corps de robinet (9).

## Patentansprüche

1. Werkzeug (1) mit Gasverbrennung in der Art, Folgendes umfassend:
- ein längliches Greiforgan (3, 204);
- einen Brenner (19), der vor dem Greiforgan (3, 204) in einer Verlängerung desselben angeordnet ist, wobei der Brenner (19) einen Brenngaseinlass (21) beinhaltet;
- einen Primärluftweg, der stromabwärts des Brenngaseinlasses (21) in den Brenner (19) mündet;
**dadurch gekennzeichnet, dass** das Greiforgan (3, 204) mindestens einen Primärlufteinlass beinhaltet, und dass der Primärluftweg mindestens teilweise durch das Greiforgan (3, 204) hindurch, ab diesem Primärlufteinlass arrangiert ist, wobei die in den Brenner (19) eingelassene Primärluft aus dem Greiforgan (3, 204) angesaugt wird.

2. Werkzeug nach Anspruch 1, wobei das Greiforgan (3, 204) mindestens einen inneren Hohlraum (8, 206) beinhaltet, der sich entlang mindestens eines Teils desselben erstreckt, und sich der Primärluftweg mindestens teilweise in diesem inneren Hohlraum (8, 206) erstreckt.

3. Werkzeug nach Anspruch 2, wobei der Lufteinlass (105) mindestens eine Öffnung (105) beinhaltet, die in das Greiforgan (3, 204) eingearbeitet ist, wobei diese Öffnung (105) in den inneren Hohlraum (8, 206) führt.

4. Werkzeug nach Anspruch 3, wobei die Öffnung (105) in der Nähe der Rückseite des Greiforgans (3, 204) eingearbeitet ist.

5. Werkzeug nach einem der Ansprüche 2 bis 4, wobei sich der innere Hohlraum (8, 206) aus der Rückseite des Greiforgans (3, 204) erstreckt, und das Werkzeug weiter einen Stopfen (101) umfasst, der an der Rückseite des Greiforgans (3, 204) montiert ist, wobei dieser Stopfen (101) den inneren Hohlraum (8, 206) mindestens teilweise abschließt.

6. Werkzeug nach einem der vorstehenden Ansprüche, das weiter ein im Allgemeinen hohles Gehäuse (7) umfasst, an dessen Rückseite das Greiforgan (3, 204) montiert ist, wobei das Gehäuse (7) einen Teil des Brenners (19) aufnimmt, der mindestens den Brenngaseinlass (21) beinhaltet, und der Primärluftweg mindestens teilweise durch das Gehäuse (7) hindurch, aus der Rückseite desselben heraus arrangiert ist.

7. Werkzeug nach Anspruch 6, das einen Ventilkörper (9) beinhaltet, der mindestens teilweise in dem Gehäuse (7) aufgenommen ist, wobei der Ventilkörper (9) mindestens einen Teil des Brenners (19) aufnimmt, der dem Brenngaseinlass (21) entspricht, und der Luftweg mindestens einem Durchlass (107) folgt, der in den Ventilkörper (9) zwischen dem Inneren des Gehäuses (7) und dem Brenner (19) eingearbeitet ist.

8. Werkzeug nach Anspruch 7, wobei der Ventilkörper (9) vorne aus dem Gehäuse (7) hervorsteht, und das Werkzeug eine Abdichtung (77) zwischen dem Ventilkörper (9) und dem Inneren des Gehäuses (7) umfasst.

9. Werkzeug nach einem der Ansprüche 6 bis 8, wobei das Gehäuse (7) mindestens an der Vorderseite desselben dicht ist.

10. Werkzeug nach einem der Ansprüche 7 und 8, wobei der Brenner (19) auf dem Ventilkörper (9) montiert ist.

11. Werkzeug nach Anspruch 10, wobei der Brenner (19) eine Nut mit einem trapezförmigen Profil (91) beinhaltet, das mit einer Regelschraube (93) zusammenwirkt, die beweglich in dem Ventilkörper (9) montiert ist.

12. Werkzeug nach Anspruch 11, wobei das Gehäuse (7) einen Durchlass (95) beinhaltet, der einen Zugriff auf die Regelschraube (93) von der Unterseite des Gehäuses (7) aus gewährt.

13. Werkzeug nach einem der Ansprüche 1 bis 6 und 9, das weiter einen Brenngasanschluss (17) umfassend, der umkehrbar an der Rückseite eines Ventilkörpers (9) montiert ist.

## Claims

1. A gas combustion tool (1) of the type comprising:
- an elongated gripping member (3, 204);
- a burner (19) disposed at the front of the gripping member (3, 204), in an extension of the latter, the burner (19) including a fuel gas intake (21);
- a primary air path which opens into the burner (19), downstream of the fuel gas intake (21);
**characterised in that** the gripping member (3, 204) includes at least one primary air intake and that the primary air path is organised, at least partially, through the gripping member (3, 204), from this primary air intake, the primary air getting in the burner (19) being sucked from the gripping member (3, 204).

2. The tool according to claim 1, wherein the gripping member (3, 204) includes at least one internal cavity (8, 206) which extends along at least one portion thereof, and the primary air path extends at least partially into this internal cavity (8, 206).

3. The tool according to claim 2, wherein the air intake (105) includes at least one opening (105) formed in the gripping member (3, 204), this opening (105) leading into the internal cavity (8, 206).

4. The tool according to claim 3, wherein the opening (105) is formed proximate to the rear of the gripping member (3, 204).

5. The tool according to one of claims 2 to 4, wherein the internal cavity (8, 206) extends from the rear of the gripping member (3, 204), and the tool further comprises a plug (101) mounted at the rear of the gripping member (3, 204), this plug (101) at least partially closing off the internal cavity (8, 206).

6. The tool according to one of the preceding claims, further comprising a generally hollow case (7), at the rear of which the gripping member (3, 204) is mounted, wherein the case (7) houses a portion of the burner (19) including at least the fuel gas intake (21), and the primary air path is organised at least partially through the case (7), from the rear thereof.

7. The tool according to claim 6, including a tap body (9) housed at least partially in the case (7), wherein the tap body (9) houses at least one portion of the burner (19) corresponding to the fuel gas intake (21), and the air path follows at least one passage (107) formed in the tap body (9) between the inside of the case (7) and the burner (19).

8. The tool according to claim 7, wherein the tap body (9) projects from the front of the case (7) and the tool comprises a seal (77) between the tap body (9) and the inside of the case (7).

9. The tool according to one of claims 6 to 8, wherein the case (7) is sealed at least at the front thereof.

10. The tool according to one of claims 7 and 8, wherein the burner (19) is mounted on the tap body (9).

11. The tool according to claim 10, wherein the burner (19) includes a groove with a trapezoidal profile (91) which cooperates with a needle screw (93) movably mounted in the tap body (9).

12. The tool according to claim 11, wherein the case (7) includes a passage (95) which gives access to the needle screw (93) from below the case (7).

13. The tool according to one of claims 1 to 6 and 9, further comprising a fuel gas connector (17) reversibly mounted at the rear of a tap body (9).
